**Europäisches Patentamt**

(19) **European Patent Office** (11) Publication number: **0 097 185**

**Office européen des brevets** **B1**

(12) **EUROPEAN PATENT SPECIFICATION**

(45) Date of publication of patent specification: **04.03.87** (51) Int. Cl.⁴: **B 63 J 3/02, H 02 P 9/00**

(21) Application number: **83900020.5**

(22) Date of filing: **10.12.82**

(86) International application number:
**PCT/DK82/00110**

(87) International publication number:
**WO 83/02099 23.06.83 Gazette 83/15**

(54) METHOD AND GENERATING PLANT FOR SHIPS HAVING A SHAFT GENERATOR.

(30) Priority: **17.12.81 DK 5596/81**

(43) Date of publication of application:
**04.01.84 Bulletin 84/01**

(45) Publication of the grant of the patent:
**04.03.87 Bulletin 87/10**

(84) Designated Contracting States:
**BE DE FR GB NL SE**

(56) References cited:
**DE-A-1 281 027**
**DE-A-1 488 979**
**DE-A-1 613 829**
**DK-B- 145 029**

(73) Proprietor: **FOURNAIS, Peter Jan**
**Enrumvej 7**
**DK-2942 Skodsborg (DK)**

(72) Inventor: **FOURNAIS, Peter Jan**
**Enrumvej 7**
**DK-2942 Skodsborg (DK)**

(74) Representative: **Ferkinghoff, Claes-Göran et al**
**ALFONS HEDBERGS PATENTBYRA AB**
**Aschebergsgatan 35**
**S-411 33 Göteborg (SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The invention relates to a method for supplying current to ships having at least one synchronous machine as a shaft generator and a generating plant for performing the method.

There are known various methods and plants for supplying current to ships where one or more synchronous generators are connected to the main engine by means of gears or like coupling devices. The main engine of the ship will thus through the shaft generator supply the necessary electric power when the ship is sailing. When the ship is not sailing, for instance when it is in port or at anchor, so called auxiliary units are normally used, said units consisting of a small diesel engine driving a generator and thereby supplying the necessary electric power for the operation of the ship.

When using a synchronous machine as a shaft generator, special measures must be taken as soon as the main engine is not kept at a number of revolutions corresponding to the synchronous frequency. It is possible for instance to let the ship be supplied with current from the auxiliary units, the electricity production being shifted from the shaft generator to the auxiliary units. It is also possible to introduce a Ward-Leonard system between the main engine and the shaft generator thereby keeping the generator at the synchronous number of revolutions. However, when using these prior-art methods, the operation becomes uneconomical and the fuel consumption unnecessarily large.

From DE—A 1 613 829 is known a generator plant for ships of the kind having a synchronous machine as a shaft generator and wherein it must be possible to change the operation and steering of the ships rapidly and efficiently, for instance war ships. The main interest according to this publication in both the claims and the description therefore is on the construction of the generator and on the sliding coupling allowing steering changes to be effected very rapidly. In addition it is mentioned on page 5 of the publication that the current supply mains are divided into three mains:

a) The first mains which is the principal mains is an electrical mains which is connected to the generator through an AC/DC rectifier and a DC/AC converter in such a manner that an AC mains is created for the principal power supply of the ship to which separate engine units may be coupled to supply missing reactive power. The generator is magnetized in such a manner that it maintains a constant voltage level on its output line and with the aid of the switching means the frequency is regulated in such a manner that the mains are supplied both with a constant-level frequency and a reasonably constant-level voltage in that missing reactive power is supplied from the units,

b) The second mains which is a DC mains for supply of power to DC current users, such as mine detector devices and the like, and

c) The third mains which is an AC mains which is connected directly to special users such as e.g. engines for operation and control of the ship rudders and other ship steering equipment. Such steering means are used periodically during the ship operation.

From DE—A 1 281 027 is known a generating plant in which the mains is supplied by a synchronous generator, through a rectifier and a converter, wherein voltage and frequency are kept at a constant level.

The purpose of the invention is to provide a method of the kind defined in the preamble of claim 1 and a power generating plant of the kind defined in the preamble of claim 3 with a view to obtain large fuel savings compared with prior-art methods and plants, and this without any restrictions or limitations of the operating conditions of the ship, i.e. ensuring that there will always be a sufficient power supply to operate the ship and its auxiliary units without damaging the electric equipment of the ship.

This is obtained in the manner defined in the characterizing clause of claim 1 while using a plant defined in the characterizing clause of claim 3.

Distribution of the electric energy in the manner specified in the description and claims ensures that the voltages and frequencies are always adapted to the consumers and that no motors or other electromagnetic circuits are ever overloaded but on the contrary are always correctly magnetized because of the correlation between frequency and voltage on the principal mains. In prior-art systems, on the other hand, wherein one tries to keep the voltage at a constant level, the frequency will drop when there is a sudden load on the mains with resulting over-magnetization in all electromagnetic circuits.

By proceeding as indicated in claim 2, for example as mentioned in claim 4, the individual consumers are distributed on the two mains in a suitable manner.

The invention will be further described in the following with reference to the drawings, wherein

Fig. 1 is a graph showing the relation between frequency and voltages for a shaft generator, and

Fig. 2 is a preferred embodiment of a generating plant according to the invention.

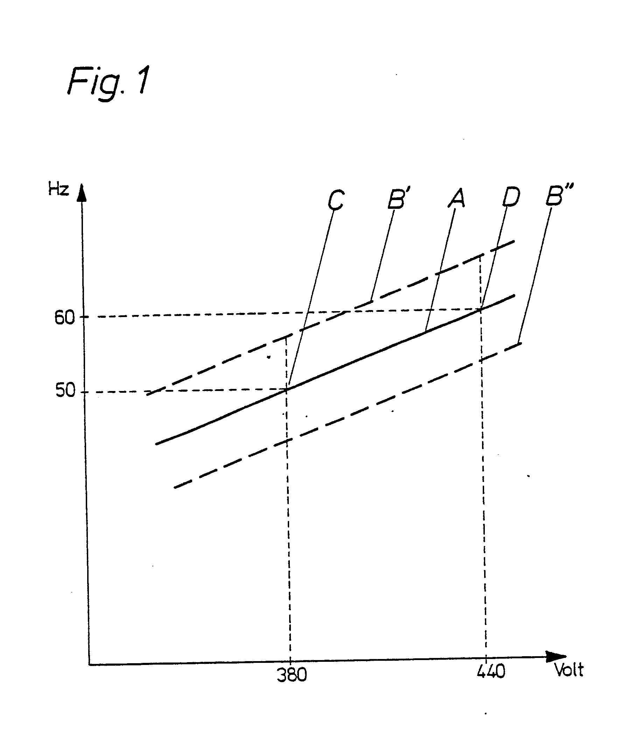

Fig. 1 of the drawing shows a graph A — substantially a straight line — showing for part of the working area of a synchronous generator the relation between frequency and voltage, e.g. when the synchronous machine works as a shaft generator.

The graph A applies to a certain load. When for example the generator operates at a synchronous number of revolutions, such as 50 Hz, a mains voltage of 380 volt is obtained at point C. If this frequency is maintained by maintaining the number of revolutions of the main engine and thus the propeller shaft, the voltage will fall, if the load is increased, i.e. the graph A will move towards the upper dashed graph B', and if the load is decreased, the voltage will increase, i.e. the graph A will move towards the lower dashed graph B''. Similar considerations apply to point D, corresponding to a supply voltage of 440 volt at 60 Hz mains frequency. This is always the case with synchronous generators and furthermore permits several generators to operate in parallel without any problems of distributing the reactive power in the system without the generators showing any cyclic variations.

The graph A in Fig. 1 thus shows a possible course for example corresponding to 80% engine power, i.e. when the ship is sailing long distances. It is rarely the case that more than 80% engine power is utilised, as in the main this will just result in increased wear and a higher fuel consumption, which financially bear no proportion to the modest increase in speed obtained. If for example the engine power is increased to 100%, an increase in speed of more than 5% is rarely obtained.

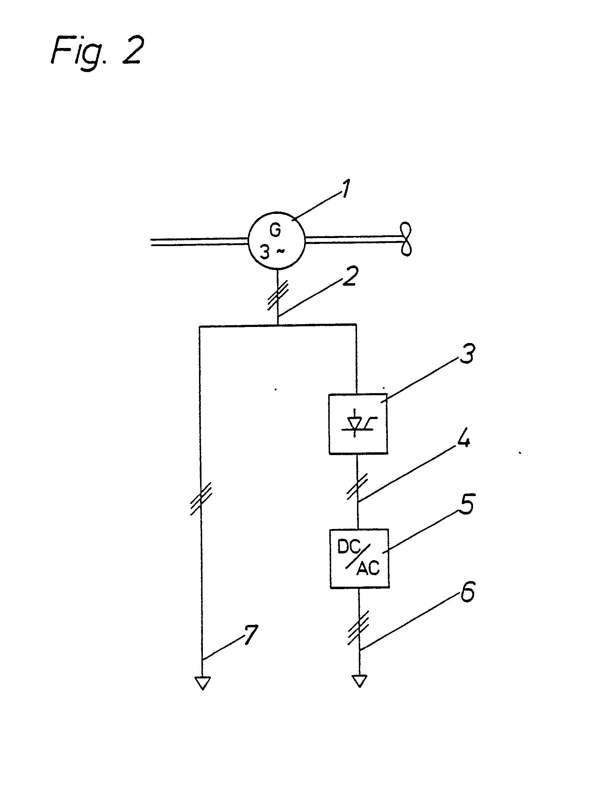

Fig. 2 shows a skeleton diagram of a generating plant according to the invention wherein 1 is a three-phase synchronous generator connected to the propeller shaft, for example by a mechanical gear. The three-phase output voltage of the generator is transmitted to two current supply mains 6 and 7 both supplying three-phase alternating current to consumers. The mains 7 is connected directly to the generator output end 2, whereas the mains 6 is connected to the generator output end 2 through a controlled rectifier circuit 3 converting the three-phase voltage to an ordinary direct current 4 which in another converter circuit 5 is converted to three-phase alternating current 6 with constant frequency and voltage. The converter circuit 5 can be an electronically controlled inverter or an AC generator driven by a DC motor such as a rotary converter or another suitable DC/AC converter circuit.

The mains 7 not having constant frequency or voltage but a frequency depending on the number of revolutions of the shaft and a voltage depending on the load is used for supplying all the users which can accept such lower quality supply such as electric motors, pumps, compressors, ventilation and cooling systems etc. Such apparatus are often driven by an asynchronous motor. The mains 6, however, is used for supplying the users which can only accept a current supply with fixed frequency and voltage, such as navigation and communication systems, steering engines, lighting etc.

On the mains 7 there will be a frequency which corresponds to the number of revolutions of the propeller shaft, i.e. a mechanically bound frequency. At a given load, the voltage will increase if the frequency is increased, and the voltage will fall if the frequency is lowered. The result is that all auxiliary units will work in time with the main engine and thereby automatically merely take up the necessary power which gives substantial power savings compared with existing plants where attempts are being made to keep total current supply at constant voltage and constant frequency so that the auxiliary units will take up the total power irrespective of the number of revolutions of the engine.

The electric power requirements of a ship may be divided in the following manner:

*a* 10% of the electric power is used for radio, communication and navigation equipment, lighting, steering engine etc. Such equipment requires constant voltage and constant frequency.

*b* 50% electric power is used for engine operation by pumps, compressors, ventilation and cooling systems etc. Such apparatus may either operate for long periods or be used for purposes where full capacity is not necessary when the main engine is not used 100%, if only the variation of the current consumption (working requirement) is directly proportional to the number of revolutions of the main engine.

*c* 40% electric power is used for heating and less important electric motors where the cut-in time is of no importance, and therefore voltage and frequency may vary without problems, if only the engine is not damaged since the cut-in or the cut-out period may be varied without causing inconvenience to the functioning of the ship. Usually the control of these functions takes place by means of thermostats, pressostats or level control equipment.

It is therefore a modest part of the power consumption only that has to be supplied at a fixed and constant frequency and voltage, and so it is necessary only to stabilise a small part of the electric power. Consequently, the circuits 3 and 5 become much less costly than in known plants where the entire power supply is normally stabilised.

An ordinary type of shaft generator system, moreover, is not applicable under certain circumstances, namely at very low speed or in a heavy sea where the number of revolutions of the main engine fluctuates more than the permissible frequency variation. Under such circumstances the auxiliary units are therefore used for producing electricity thereby increasing the oil consumption.

A plant according to the invention, however, can be used under all circumstances, if only voltage or frequency do not fluctuate so much from the nominal values as to damage the consumers. Generally, the ordinary electric equipment can stand variations of up to plus 10% to minus 15% from the nominal voltage without damages being incurred. If these limits are exceeded, the auxiliary units on the ship may fail or be damaged and therefore the plant must be adapted in such a way that the current supply auxiliary units are connected in the normal way.

**Claims**

1. A method of supplying power to ships having at least one synchronous machine as a shaft generator (1) and at least one auxiliary unit consisting of an independent motor having a generator supplying electric power with an essentially constant frequency, and coupling means for connecting the bus bars of the ship to provide AC power to either the shaft generator power supply or to the auxiliary unit power supply and that the power from the shaft generator/generators is distributed to two supply mains, a first mains (7) with voltage and frequency equal to voltage and frequency of the shaft generator and a second mains (6), the voltage and frequency of which is maintained essentially at a constant level, characterized therein that the first mains is supplied with approx. 85—95% of the generator power and the voltage and frequency of which are such that at a predetermined load the voltage rises when the frequency rises and the voltage falls when the frequency falls, and the second mains is supplied with approx. 5—15% of the generator power.

2. A method as claimed in claim 1, characterized therein that the first supply mains (7) is used for supplying current to electric motors, pumps, compressors, ventilating and cooling systems etc., and that the second supply mains (6) is used for supplying current to navigation and communication systems, steering engine, lighting and similar installations requiring constant voltage and frequency.

3. A power generating plant for supplying power to ships having at least one synchronous machine as a shaft generator (1) and at least one auxiliary unit consisting of an independent motor having a generator supplying electric power with an essentially constant frequency, and coupling means for connecting the bus bars of the ship to supply AC power to either the shaft generator power supply or to the auxiliary unit power supply, and that it comprises two separate supply mains, a first mains (7) with voltage and frequency equal to voltage and frequency of the shaft generator and a second mains (6), the voltage and frequency of which is maintained essentially at a constant level, for performing the method in accordance with claim 1, characterized therein that the first mains (7) is dimensioned and adapted to be supplied with approx. 85—95% of the power directly from the shaft generator/-generators (1) and the voltage and frequency of which are such that upon a predetermined load the voltage rises when the frequency rises and the voltage falls when the frequency falls, and the second mains (6) is dimensioned and adapted to be supplied with approx. 5—15% of the generator power through a circuit (3, 4, 5).

4. A power generating plant as claimed in claim 3, characterized therein that electric motors, pumps, compressors, ventilating and cooling systems etc. are connected to the first supply mains (7), and that navigation and communicaton systems, steering engine, lighting and similar installations requiring constant voltage and frequency are connected to the second mains (6).

**Patentansprüche**

1. Verfahren zur Lieferung von Energie für Schiffe, die mindestens eine Synchronmaschine in Form eines Wellengenerators (1), und mindestens eine Hilfsmaschine, bestehend aus einem unabhängigen Motor mit einem elektrische Energie mit im wesentlichen konstanter Frequenz liefernden Generator besitzen, und Kupplungsmittel, um die Sammelschienen des Schiffes zur Lieferung von Wechselstrom entweder an die Sammelleitung des Wellengenerators oder an die Sammelleitung der Hilfmaschine anzuschließen, und daß die Leistung des Wellengenerators/Generatoren an zwei Versorgungsnetze verteilt wird, ein erstes Netz (7) mit einer Spannung und Frequenz, die gleich ist der Spannung und Frequenz des Wellengenerators, und ein zweites Netz (6), dessen Spannung und Frequenz im wesentlichen auf einer konstanten Höhe gehalten wird, dadurch gekennzeichnet, daß das erste Netz mit ca. 85—95 % des Generatorstroms beliefert wird, und dessen Spannung und Frequenz so ausgelegt sind, daß sich bei einer vorgegebenen Last die Spannung erhöht, wenn sich die Frequenz erhöht, und die Spannung fällt, wenn die Frequenz fällt, und das zweite Netz mit ca. 5—15 % des Generatorstroms versorgt wird.

2. Verfahren nach Anspruch 1, dadurch gekennzeichnet, daß das erste Versorgungsnetz (7) zur Lieferung von Strom an Elektromotoren, Pumpen, Kompressoren, Belüftungs- und Kühlsysteme etc., und daß das zweite Versorgungsnetz (6) für die Lieferung von Strom für die Navigation und Kommunikationssysteme, die Steuermaschine, Beleuchtung und ähnliche Einrichtungen, die eine konstante Spannung und Frequenz erfordern, verwendet wird.

3. Eine Stromerzeugungsanlage zur Lieferung von Energie für Schiffe, die mindestens eine Synchronmaschine in Form eines Wellengenerators (1) und mindestens eine Hilfsmaschine, bestehend aus einem unabhängigen Motor mit einem elektrische Energie mit im wesentlichen konstanter Frequenz liefernden Generator besitzt, und Kupplungsmittel, um die Sammelschienen des Schiffes zur Lieferung von Wechselstrom, entweder an die Sammelleitung des Wellengenerators oder an die Sammelleitung der Hilfmaschine anzuschließen, und daß sie zwei getrennte Versorgungsnetze besitzt, ein erstes Netz (7) mit einer Spannung und Frequenz gleich der Spannung und Frequenz des Wellengenerators und ein zweites Netz (6), dessen Spannung und Frequenz im wesentlichen auf einer konstanten Höhe gehalten wird, zur Durchführung des Verfahrens nach Anspruch 1, dadurch gekennzeichnet, daß das erste Netz (7) so dimensioniert und adaptiert ist, daß es mit ca. 85—95 % der Leistung direkt von dem Wellengenerator/ Generatoren (1) beliefert werden kann, und dessen Spannung und Frequenz so ausgelegt sind, daß sich bei einer vorgegebenen Last die Spannung erhöht, wenn sich die Frequenz erhöht und die Spannung fällt, wenn die Frequenz fällt, und das zweite Netz (6) so dimensioniert und adaptiert ist, daß es mit ca. 5—15 % des Generatorstroms über einen Stromkreis (3, 4, 5) versorgt werden kann.

4. Stromerzeugungsanlage nach Anspruch 3, dadurch gekennzeichnet, daß Elektromotoren, Pumpen, Kompressoren, Belüftungs- und Kühlsysteme etc. an das erste Netz (7), und daß die Navigations- und Kommunikationssysteme, die Steuermaschine, Beleuchtung und ähnliche Einrichtungen, die eine konstante Spannung und Frequenz erfordern, an das zweite Netz (6) angeschlossen werden.

**Revendications**

1. Procédé pour fournir de l'énergie à des navires ayant au moins une machine synchrone comme générateur d'arbre (1) et au moins une unité auxiliaire formée d'un moteur indépendant ayant un générateur fournissant de l'énergie électrique avec une fréquence pratiquement constante, et des moyens de couplage pour relier les barres omnibus du navire de manière à fournir de l'énergie de courant alternatif soit à la source d'énergie de générateur d'arbre soit à la source d'énergie d'unité auxiliaire, l'énergie venant du ou des générateurs d'arbre étant distribuée à deux réseaux d'alimentation, un premier réseau (7) qui a une tension et une fréquence égales à la tension et à la fréquence du générateur d'arbre et un deuxième réseau (6) dont la tension et la fréquence sont maintenues pratiquement à un niveau constant, caractérisé en ce que le premier réseau est alimenté par environ 85 à 95 % de l'énergie du générateur, en ce que la tension et la fréquence de cette énergie sont telles qu'à une charge prédéterminée, la tension s'élève quand la fréquence s'élève et la tension s'abaisse quand la fréquence s'abaisse, et en ce que le deuxième réseau est alimenté par environ 5 à 15 % de l'énergie du générateur.

2. Procédé selon la revendication 1, caractérisé en ce que l'on utilise le premier réseau d'alimentation (7) pour fournir du courant à des moteurs électriques, pompes, compresseurs, systèmes de ventilation et de refroidissement, etc, et en ce que l'on utilise le deuxième réseau d'alimentation (6) pour fournir du courant à des systèmes de navigation et de communication, à un moteur de direction, à l'éclairage et à des installations similaires nécessitant une tension et une fréquence constantes.

3. Installation génératrice d'énergie pour fournir de l'énergie à des navires ayant au moins une machine synchrone comme générateur d'arbre (1) et au moins une unité auxiliaire formée d'un moteur indépendant ayant un générateur fournissant de l'énergie électrique avec une fréquence pratiquement constante, et des moyens de couplage pour relier les barres omnibus du navire de manière à fournir de l'énergie de courant alternatif soit à la source d'énergie du générateur d'arbre soit à la source d'énergie d'unité auxiliaire, et comprenant deux moyens de fourniture séparée, un premier réseau (7) ayant une tension et une fréquence égales à la tension et à la fréquence du générateur d'arbre et un deuxième réseau (6) dont la tension et la fréquence sont maintenues pratiquement à un niveau constant, pour la mise en oeuvre du procédé selon la revendication 1, caractérisée en ce que le premier réseau (7) est de dimension telle et conçu de telle sorte qu'il est alimenté par environ 85 à 95 % de l'énergie venant directement du ou des générateurs d'arbre (1) et dont la tension et la fréquence sont telles que lors d'une charge prédéterminée, la tension s'élève quant la fréquence s'élève et la tension s'abaisse quand la fréquence s'abaisse, et en ce que le deuxième réseau (6) est de dimension telle et conçu de telle sorte qu'il est alimenté par environ 5 à 15 % de l'énergie du générateur, par l'intermédiaire d'un circuit (3, 4, 5).

4. Installation génératrice d'énergie selon la revendication 3, caractérisée en ce que des moteurs électriques, des pompes, des compresseurs, des systèmes de ventilation et de refroidissement, etc, sont reliés au premier réseau d'alimentation (7), et en ce que des systèmes de navigation et de communication, un moteur de direction, des installations d'éclairage et similaires nécessitant une tension et une fréquence constantes sont reliés au deuxième réseau (6).

Fig. 1

*Fig. 2*